# EUROPÄISCHE PATENTSCHRIFT

(11) **EP 2 024 409 B1**
(45) Veröffentlichungstag und Bekanntmachung des Hinweises auf die Patenterteilung: **14.12.2011**
(21) Anmeldenummer: 07712166.3
(22) Anmeldetag: 08.02.2007
(51) Int. Cl.: C08G 18/10, C08G 18/76, D21F 3/08

(54) **Verfahren zur Herstellung eines PU-Walzenbezugs**
Process for making a PU-roller coating
Procedure de preparation d'un revêtement de rouleau à base de PU

(30) Priorität: 05.05.2006 DE 102006020897
(43) Veröffentlichungstag der Anmeldung: 18.02.2009
(73) Patentinhaber: Voith Patent GmbH, 89522 Heidenheim (DE)
(72) Erfinder: WOKUREK, Michael, A-1100 Wien (AT); BREINEDER, Martin, A-2620 Natschbach (AT)
(86) Internationale Anmeldenummer: PCT/EP2007/051201
(87) Internationale Veröffentlichungsnummer: WO 2007/128596

(56) Entgegenhaltungen:
- EP-A2- 0 982 079
- WO-A-97/42246
- US-A1- 2003 040 379
- US-A1- 2003 122 282

## Beschreibung

Die Erfindung betrifft ein Verfahren zur Herstellung eines Walzenmantels oder Walzenbezugs einer Walze aus einem PPDI basierten Poyurethan-Kunststoff.

Polyurethan Elastomere die durch eine ein- oder mehrstufige Reaktion von PPDI (p-Phenylendiisocyanat) mit Mischungen von Polyolen, Diolen und Diaminen entstehen sind seit mehreren Jahrzehnten bekannt.

PPDI-Polyurethan Elastomere zeichnen sich durch hohe Reiß- und Weiterreißfestigkeit, hohe Abriebbeständigkeit, hohe Hydrolysebeständigkeit und hohe Elastizität aus.

Jedoch kommt es beim Erhärten zu starkem Schrumpf und schlechter Grünfestigkeit.

Die Aufgabe der Erfindung ist es daher den Schrumpf zu vermindern und die Grünfestigkeit zu verbessern, um so die Einsatzmöglichkeiten des Kunststoffs zu erweitern.

Erfindungsgemäß wurde die Aufgabe dadurch gelöst, dass der dem Polyurethan zugesetzte Härter die Topfzeit auf 5 bis 60 s verkürzt,

wobei der Hartes aus 60-99% 1,4Butandiol, maximal 40% Diamin sowie hochstens 1% eines katalysators besteht.

Durch die verminderte Topfzeit kommt es zu einer raschen Überwindung der Grünfestigkeitsschwäche, was die Gefahr von Spannungsrissen während des Aushärtens des Kunststoffs erheblich vermindert.

Dabei ist es vorteilhaft, wenn die Topfzeit auf 8 bis 20 s, insbesondere 8 bis 12 s verkürzt wird.

Durch die geeignete Wahl des Härters kann die Reaktionsgeschwindigkeit und der Viksoitätsanstieg im Zuge der Vernetzungsreaktion zwischen dem PPDI-basierten Präpolymer und dem Härter so gesteuert werden, dass die Herstellung des Walzenmantels oder des Walzenbezug mittels Rotationsguss möglich wird.

Dies wird noch dadurch unterstützt, dass durch die beschleunigte Vernetzungsreaktion ein schnelles Durchschreiten des Zeitraums der topfigen Materialkonsistenz, bei der das Material fest, aber ohne wesentliche mechanische Festigkeit und Elastizität ist, erfolgt.

Dabei wird der Kunststoff auf einem zylindrischen, drehbar gelagerten Gießkörper mit einer parallel zur Achse des Gießkörpers verfahrbaren Gießdüse aufgetragen, wobei die Temperatur des aufgetragenen Kunststoffs zwischen 70 und 110°C liegen sollte.

Um die Spannungsrißneigung des aufgebrachten Kunststoffes während des Aushärtens zu verringern, sollte dieser einen Katalysator enthalten, der vorzugsweise aus der Gruppe der PU Polymeriastionskatalystoren gewählt wird. Zu dieser Gruppe gehören verschiedenste metallorganische Verbindungen und Salze von Zn, Co, Bi, Hg, Cd, K u.v.a.m. wie z.B.:
Dibutylzinndilaurat, Zinnoctoat, Dioctylzinndiacetat, Dibutylzinnmercaptid, Dibutylzinnoxid, Dimethylzinnmercaptid, Dioctylzinnmercaptid, Dimethylzinncarboxylat, ... Weiters alle tertiären Amine wie z.B.:
Bis-(2-dimethylaminoethyl)-ether, Alkylmorpholine, 1,4-Diazabicyclooctan, N,N-Alkylbenzylamine, 1,2-Dimethylimidazol, N,N-Dimethylcyclohexylamin, N,N,N',N'-Tetramethylethylendiamin.

Vor allem beim Gießen großer hohlzylindrischer Bauteile, wie Pressmänteln oder Walzenbezügen hat es sich als vorteilhaft erwiesen, wenn die Umfangsgeschwindigkeit des Gießkörpers zwischen 15 und 80 m/min liegt und die Gießdüse mit einer Geschwindigkeit zwischen 5 und 10 mm/U axial verfahren wird.

Um eine gute Durchmischung der Komponenten zu errreichen, sollte die Mischung mit dem Härter in einer Mischkammer nach dem Rotor/Stator Prinzip erfolgen.

Es ist vorteilhaft daß Rotor und Stator konstruktiv so ausgeführt sind, daß folgende Bedingungen erfüllt sind:
Die durch die konstruktive Ausführung resultierende Spaltbreitenverteilung zwischen Rotor und Stator sollte im Bereich von 1-5 mm liegen und möglichst eng sein, um eine möglichst gleichmäßige Scherbelastung der Reaktionsmischung zu erreichen und dadurch eine Verstopfung der Mischkammer in Bereichen mit geringer Schergeschwindigkeit zu verhindern.

Das Totvolumen der Mischkammer sollte möglichst gering sein. Besonders bewährt haben sich Mischkammern mit einem Totvolumen von 5 bis 50 ml zur Durchmischung eines Materialvolumensstromes von 0,5 bis 10 l/min.

Die daraus resultierenden kurzen Verweilzeiten erfordern eine sehr effektive Durchmischung die einerseits durch hohe Rotordrehzahlen im Bereich von 1000-5000 U/min und andererseits durch strömungsteilende Elemente an Rotor und Stator, die ein geradliniges Durchfließen der Mischkammer verhindern, erreicht wird.

Hinsichtlich des PPDI-Polyurethan ist erfindungswesentlich, dass der Härter aus 60 bis 99 % 1,4-Butandiol, maximal 40 % Diamin sowie höchstens 1 % eines Katalysators besteht.

Über eine derartige Härterzusammensetzung lässt sich die gewünschte Beeinflussung der Reaktionsgeschwindigkeit und der Vikositätsanstieg im Zuge der Vernetzungsreaktion besonders gut erreichen.

Dabei ist es von Vorteil, wenn der Härter zumindest 1 % Diamin und/oder wenigstens 0,01 % eines Katalysators enthält.

Das Diamin in der Härtermischung sollte vorteilhaft aus folgender Gruppe gewählt werden:
Diethyltoluoldiamin, Dimethylthiotoluoldiamin, Hexamethylendiamin, Tetramethylendiamin, Ethylendiamin, o-Phenylendiamin, m-Phenylendiamin, p-Phenylendiamin, 1,4-Diaminocyclohexan, 1,2-Diaminocyclohexan, 4,4'-Diaminodiphenylmethan, Isophorondiamin, 4,4'-Diaminodicyclohexylmethan, 4,4'-Methylene-bis-(3-chloro-anilin), 4,4'-Methylene-bis-(3-chloro-2,6-diethylanilin), Trime-thylenglycoldi-p-aminobenzoate, 1,2-Bis-(2-aminophenylthio)ethan, 4,4'-Diamino-3,3'-dimethyl-dicyclohexylmethan.

Das PPDI-Präpolymer wird vorteilhaft aus der Gruppe folgender Produkte der Fa. Crompton oder einem gleichwertigen Produkt eines anderen Herstellers gewählt:
Adiprene LFP 590D, Adiprene LFP 950A, Adiprene LFP 850A, Adiprene LFP 1950A, Adiprene LFP 2950A.

Die Stöchiometrie der Mischung, also das molare Verhältnis zwischen dem Isocyanatgehalt und dem Gehalt an reaktivem Wasserstoff sollte zwischen 0,85 und 1,15 liegen, um ein optimal ausgewogenes Materialeigenschaftsspektrum zu erhalten.

Ein derartig hergestellter Walzenmantel oder Walzenbezug ist sehr verschleißfest, hochbelastbar und langlebig und eignet sich wegen der hohen Anforderungen insbesondere zur Anwendung bei Walzen in Maschinen zur Herstellung und/oder Veredlung einer Papier-, Karton-, Tissue- oder einer anderen Faserstoffbahn.

Dabei sollte die Härte der PPDI-Polyurethane zwischen 80 Shore A und 75 Shore D liegen.

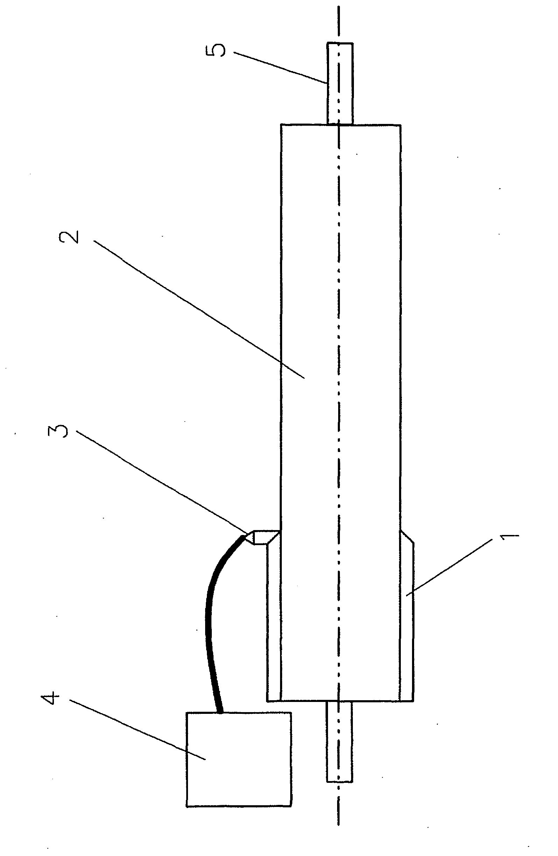

Nachfolgend soll die Erfindung an einem Ausführungsbeispiel näher erläutert werden. In der beigefügten Zeichnung zeigt die Figur einen schematischen Querschnitt durch eine Gießvorrichtung.

Dabei wird auf einen drehbar gelagerten Gießkörper 2 in Form eines zylindrischen Walzengrundkörpers im Rotationsgussverfahren ein Kunststoff zur Bildung eines Walzenbezugs 1 aufgetragen.

Dies erfolgt über eine, als Breitschlitzdüse ausgebildete Gießdüse 3, die den flüssigen Kunststoff mit einer Temperatur zwischen 70 und 90°C von einer Mischkammer 4 erhält.

Die dynamische Mischkammer 4 arbeitet nach dem Rotor/Stator Prinzip.

Während des Auftragens rotiert der Gießkörper 2 mit einer, vorzugsweise konstanten Umfangsgeschwindigkeit, die zwischen 15 und 80 m/min liegt. Die parallel zur Rotationsachse 5 des Gießkörpers 2 verfahrbare Gießdüse 3 wird mit einer Geschwindigkeit zwischen 2 und 15, normalerweise zwischen 5 und 10 mm/Umdrehung bewegt, so dass ein gleichmäßig starker Bezug auf den Gießkörper 2 aufgetragen wird.

Der Ausstoß der Gießdüse 3 liegt zwischen 500 und 10000 g/min.

Zur Herstellung eines möglichst widerstandsfähigen Walzenbezugs 1 wird der Kunststoff von PPDI-Polyurethan gebildet, welches durch Mischung eines PPDI-Präpolymers mit einem Härter in der Mischkammer 4 entsteht.

Dabei soll der Härter die Topfzeit auf Werte zwischen 8 und 12 s verkürzen. Diese beschleunigte Vernetzung ermöglicht erst die Anwendung des Rotationsgussverfahrens.

Erreicht wird dies hier durch einen Härter, der aus 92 % 1,4-Butandiol, 7,95 % p-Phenylendiamin und 0,05 % Dioctylzinnmercaptid besteht.

Der Anteil an Diamin bestimmt durch seine extrem schnelle Reaktionsgeschwindigkeit das Fließverhalten der Kunststoffmischung zum Zeitpunkt des Austritts aus der Gießdüse3 und in den ersten 2-5 Sekunden danach. Dieses Fließverhalten ist für eine erfolgreiche Prozeßführung entscheidend. Zu geringe Viscosität hat abhängig von Drehzahl und Durchmesser des rotierenden Gießkörpers 2 ein rasches Abrinnen bzw. Abschleudern des aufgebraschten Materials zur Folge und limitiert somit die erzielbare Schichtstärke. Zu hohe Viscosität verhindert ein gleichmäßiges Verfließen des Kunststoffes, was zu einer unerwünschten groben Oberflächenstruktur (Rippen) und Lufteinschlüssen führt.

Der Katalysator bewirkt in weiterer Folge ein rasches Nachziehen der Butandiol-Isocyanat Vernetzungsreaktion. Er ist damit verantwortlich für ein sehr rasches Durchschreiten des Zeitraums der topfigen Materialkonsistenz (cheesy state / schlechte Grünfestigkeit) während dessen das Werkstück extrem anfällig für das Auftreten von fatalen Spannungsrissen ist.

Nur die kombinierte Anwendung beider Härterbestandteile ermöglicht es sowohl das für den Rotationsgußsprozeß erforderliche Fließverhalten der Kunststoffmischung einzustellen, als auch ein spannungsrißfreies Endprodukt zu gewährleisten.

Die Stöchiomietrie der Mischung beträgt 95% (Isocyanatüberschuß).

Besonders vorteilhaft ist dies bei der Herstellung von Walzen zur Verwendung in Maschinen zur Herstellung und/oder Veredlung einer Papier-, Karton-, Tissue- oder einer anderen Faserstoffbahn. Derartige Walzen sind einer sehr hohen Belastung ausgesetzt und haben Längen von bis zu 10 m und Durchmesser von bis zu 2 m. Das Verfahren wie auch der Kunststoff eignen sich ebenso für die Herstellung von flexiblen Walzenmänteln. Diese sind meist durch, in den Kunststoff eingebettete Fasern, Fäden o.ä verstärkt und werden vor allem bei der Entwässerung oder Glättung der Faserstoffbahn eingesetzt.

Die Walzenmäntel werden dabei in analoger Weise durch das Auftragen des Kunststoffs auf einen zylindrischen Gießkörper 2 hergestellt, wobei der fertige Walzenmantel allerdings vom Gießkörper 2 abgezogen oder der Gießkörper 2 aus dem gegossenen Walzenmantel entfernt wird.

Derartig hergestellte Walzenbezüge 1 oder Walzenmäntel zeichnen sich durch eine Erhöhung der Dauerbelastbarkeit hinsichtlich Linienlast und Maschinengeschwindigkeit sowie die Verlängerung möglicher Schleifintervalle zur Bearbeitung der Manteloberfläche aus. ,

## Patentansprüche

1. Verfahren zur Herstellung eines Walzenmantels oder Walzenbezugs (1) einer Walze aus einem p-Phenylendiisocyanat (PPDI) basierten Polyurethan-Kunststoff, der aus einem PPDI-Präpolymer mit einem Härter besteht, **dadurch gekennzeichnet, dass** der dem Polyurethan zugesetzte Härter die Topfzeit auf 5 bis 60 s verkürzt, wobei der Härter aus 60 bis 99 % 1,4-Butandiol, maximal 40 % Diamin sowie höchstens 1 % eines Katalysators besteht.

2. Verfahren nach Anspruch 1, **dadurch gekennzeichnet, dass** die Topfzeit auf 8 bis 12 s verkürzt wird.

3. Verfahren nach Anspruch 1 oder 2, **dadurch gekennzeichnet, dass** dass die Herstellung mittels Rotationsguss erfolgt.

4. Verfahren nach Anspruch 3, **dadurch gekennzeichnet, dass** der Kunststoff auf einem zylindrischen, drehbar gelagerten Gießkörper (2) mit einer parallel zur Achse (5) des Gießkörpers (2) verfahrbaren Gießdüse (3) aufgetragen wird.

5. Verfahren nach einem der vorhergehenden Ansprüche, **dadurch gekennzeichnet, dass** die Temperatur des aufgetragenen Kunststoffs zwischen 70 und 110° liegt.

6. Verfahren nach einem der vorhergehenden Ansprüche, **dadurch gekennzeichnet, dass** der Härter einen Katalysator enthält, der vorzugsweise aus der Gruppe de PU Polymerisationskatalysatoren stammt und insbesondere von metallorganischen Verbindungen, Salzen oder tertiären Aminen gebildet wird.

7. Verfahren nach einem der Ansprüche 4 bis 6, **dadurch gekennzeichnet, dass** die Umfangsgeschwindigkeit des Gießkörpers (2) zwischen 15 und 80 m/min liegt.

8. Verfahren nach einem der Ansprüche 4 bis 7, **dadurch gekennzeichnet, dass** die Gießdüse (3) mit einer Geschwindigkeit zwischen 2 und 15, insbesondere zwischen 5 und 10 mm/U axial verfahren wird.

9. Verfahren nach einem der vorhergehenden Ansprüche, **dadurch gekennzeichnet, dass** die Mischung mit dem Härter in einer Mischkammer (4) nach dem Rotor/Stator Prinzip erfolgt.

10. Anwendung der Walze nach einem der vorhergehenden Ansprüche in einer Maschine zur Herstellung und/oder Veredelung einer Papier-, Karton-, Tissue-oder anderen Faserstoffbahn.

## Claims

1. Method for producing a roller casing or roller coating (1) of a roller made from a p-phenylenediisocyanate (PPDI) -based polyurethane plastic which consists of a PPDI prepolymer with a hardener, **characterized in that** the hardener added to the polyurethane shortens the pot life to 5 to 60 s, the hardener consisting of 60 to 99% 1,4-butanediol, a maximum of 40% diamine and at most 1% of a catalyst.

2. Method according to Claim 1, **characterized in that** the pot life is shortened to 8 to 12 s.

3. Method according to Claim 1 or 2, **characterized in that** production takes place by means of rotary casting.

4. Method according to Claim 3, **characterized in that** the plastic is applied to a cylindrical, rotatably mounted casting body (2) by means of a casting nozzle (3) movable parallel to the axis (5) of the casting body (2).

5. Method according to one of the preceding claims, **characterized in that** the temperature of the applied plastic is between 70 and 110°.

6. Method according to one of the preceding claims, **characterized in that** the hardener contains a catalyst which preferably comes from the group of PU polymerization catalysts and is formed, in particular, by organometallic compounds, salts or tertiary amines.

7. Method according to one of Claims 4 to 6, **characterized in that** the circumferential speed of the casting body (2) is between 15 and 80 m/min.

8. Method according to one of Claims 4 to 7, **characterized in that** the casting nozzle (3) is moved axially at a speed of between 2 and 15, in particular of between 5 and 10 mm/revolution.

9. Method according to one of the preceding claims, **characterized in that** mixing with the hardener takes place in a mixing chamber (4) according to the rotor/stator principle.

10. Use of the roller according to one of the preceding claims in a machine for the production and/or finishing of a paper, cardboard, tissue or other fibrous web.

## Revendications

1. Procédé de préparation d'une enveloppe de rouleau ou d'un revêtement de rouleau (1) d'un rouleau en un matériau synthétique de polyuréthane à base de p-phénylènediisocyanate (PPDI), qui se compose d'un prépolymère de PPDI avec un durcisseur, **caractérisé en ce que** le durcisseur ajouté au polyuréthane raccourcit la durée de vie en pot à 5 à 60 s, dans lequel le durcisseur se compose de 60 à 99 % de 1,4-butanediol, maximum 40 % de diamine ainsi qu'au maximum 1 % d'un catalyseur.

2. Procédé selon la revendication 1, **caractérisé en ce que** la durée de vie en pot est raccourcie à 8 à 12 s.

3. Procédé selon la revendication 1 ou 2, **caractérisé en ce que** la préparation est réalisée par coulée rotative.

4. Procédé selon la revendication 3, **caractérisé en ce que** l'on dépose le matériau synthétique sur un corps de coulée cylindrique (2), monté de façon rotative, avec une buse de coulée (3) déplaçable parallèlement à l'axe (5) du corps de coulée (2).

5. Procédé selon l'une quelconque des revendications précédentes, **caractérisé en ce que** la température du matériau synthétique déposé est comprise entre 70 et 110°.

6. Procédé selon l'une quelconque des revendications précédentes, **caractérisé en ce que** le durcisseur contient un catalyseur, qui provient de préférence du groupe des catalyseurs de polymérisation de PU et qui est formé en particulier par des composés organométalliques, de sels ou d'amines tertiaires.

7. Procédé selon l'une quelconque des revendications 4 à 6, **caractérisé en ce que** la vitesse périphérique du corps de coulée (2) est comprise entre 15 et 80 m/min.

8. Procédé selon l'une quelconque des revendications 4 à 7, **caractérisé en ce que** l'on déplace la buse de coulée (3) axialement avec une vitesse comprise entre 2 et 15, en particulier entre 5 et 10 mm/tr.

9. Procédé selon l'une quelconque des revendications précédentes, **caractérisé en ce que** le mélange avec le durcisseur est effectué dans une chambre de mélange (4) selon le principe du rotor/stator.

10. Utilisation du rouleau selon l'une quelconque des revendications précédentes dans une machine pour la fabrication et/ou le traitement d'une bande de papier, de carton, d'essuie-tout ou d'une autre matière fibreuse.
